# EUROPEAN PATENT SPECIFICATION

(11) **EP 2 431 125 B1**
(45) Date of publication and mention of the grant of the patent: **05.09.2012**
(21) Application number: 11181108.9
(22) Date of filing: 13.09.2011
(51) Int. Cl.: B23Q 11/00, B23Q 11/12, B23D 59/00

(54) **Dust-collecting mechanisms**
Staubsammelmechanismus
Mécanisme de collecte de poussière

(30) Priority: 17.09.2010 JP 2010208992
(43) Date of publication of application: 21.03.2012
(73) Proprietor: Makita Corporation, Anjo, Aichi 446-8502 (JP)
(72) Inventor: Aoyama, Syuji, Anjo, Aichi 446-8502 (JP); Kani, Toshiyuki, Anjo, Aichi 446-8502 (JP)
(74) Representative: Kramer - Barske - Schmidtchen

(56) References cited:
- EP-A1- 1 679 156
- WO-A1-03/051574

## Description

The present invention relates to dust-collecting mechanisms of electrical power tools. More particularly, the present invention relates to dust-collecting mechanisms of electrical power tools (e.g., cutting machines) for collecting cutting powder or chips that can be produced when cutting operations are performed using the electrical power tools.

Such mechanisms are known for example from the patent document EP-A-1 679 156.

A cutting machine (e.g., a table circular saw and a table sliding circular saw) can be exemplified as an electrical power tool. The cutting machine has a circular saw blade and a drive motor (a blade drive motor). Upon actuation of the drive motor, the circular saw blade can be rotated, so as to cut a workpiece. Generally, the cutting machine has a dust-collecting mechanism (device) attached thereto in order to collect cutting powder or chips that can be produced by a cutting operation.

A cutting machine having a dust-collecting mechanism is taught by, for example, Japanese Laid-Open Patent Publications Nos. 2000-246703 (Document 1) and 2009-143129 (Document 2). In the cutting machine taught by Document 1, the dust-collecting mechanism has a dust guide channel and a fan that is disposed in the dust guide channel. The fan is arranged and constructed to be rotated by a drive motor of the cutting machine. In particular, the fan is rotatably connected to the drive motor via a drive force transmission mechanism. The drive force transmission mechanism is constructed of grooved pulleys that are respectively attached to the fan and the drive motor and a V-belt that is attached to the pulleys. Upon rotation of the drive motor, a saw blade can be rotated to cut a workpiece. Simultaneously, the fan can be rotated, so that cutting powder or chips produced by a cutting operation can be drawn into the dust guide channel. The drawn cutting powder can be discharged from a discharging port formed in the dust guide channel. The discharged cutting powder can be collected into a dust bag attached to the discharging port of the dust guide channel.

In the cutting machine taught by Document 2, the dust-collecting mechanism has a dust drawing port, a dust discharging port, a dust collecting fan and a fan motor. Upon rotation of a drive motor of the cutting machine, a saw blade can be rotated to cut a workpiece. When a cutting operation is started, the fan motor can be actuated, so that the fan can be rotated. As a result, cutting powder or chips produced by the cutting operation can be drawn from the dust drawing port. The drawn cutting powder can be discharged from the dust discharging port. The discharged cutting powder can be collected into a dust bag attached to the dust discharging port.

According to the dust-collecting mechanism taught by Document 1 or Document 2, the cutting powder produced by the cutting operation can be effectively and reliably collected into the dust bag. As a result, the cutting operation of the cutting machine can be performed accurately and smoothly.
However, the prior art dust-collecting mechanism has a relatively complicated structure. Therefore, there is a need in the art for an improved dust-collecting mechanism of a cutting machine.

In one aspect of the present invention, a dust-collecting mechanism of an electrical power tool which has a drive motor as a power source thereof and a cooling fan capable of cooling the drive motor may includes a dust-collecting container that is capable of collecting cutting chips produced from the electrical power tool, and a dust-collecting air flow generating means having a drive fan. The drive fan is arranged and constructed to be rotated by an air flow generated by the cooling fan. The dust-collecting air flow generating means is arranged and constructed to generate a dust-collecting air flow capable of introducing the cutting chips into the dust-collecting container when the drive fan is rotated.

According to this aspect, the drive fan can be rotated by the air flow generated by the cooling fan, so that the dust-collecting air flow can be generated. As a result, the cutting chips can be introduced into the dust-collecting container. Therefore, it is not necessary to provide a drive force transmission mechanism that is capable of transmitting a drive force of the drive motor to the drive fan in order to rotate the drive fan, or a fan motor that is capable of directly rotating the drive fan. Therefore, the dust-collecting mechanism may have a simplified structure.

Optionally, the dust-collecting air flow generating means may have a dust-collecting fan that is coaxially integrated with the drive fan, so as to be rotated with the drive fan. The dust-collecting fan is arranged and constructed to generate the dust-collecting air flow when rotated.
Further, the dust-collecting fan may be positioned adjacent to an inlet port of the dust-collecting container such that the dust-collecting air flow can be generated from outside toward inside of the dust-collecting container. Conversely, the dust-collecting fan may be positioned adjacent to an outlet port of the dust-collecting container such that the dust-collecting air flow can be generated from inside toward outside of the dust-collecting container.

Other objects, features and advantages of the present invention will be readily understood after reading the following detailed description together with the accompanying drawings and the claims.
FIG. 1 is a side view of a table sliding circular saw having a dust-collecting mechanism according to a first embodiment of the present invention, which is viewed from a left side of a user;
FIG. 2 is a vertical cross-sectional view of the dust-collecting mechanism taken along a longitudinal direction; and
FIG. 3 is a transverse cross-sectional view of a dust-collecting mechanism according to a second embodiment of the present invention.

Next, the representative embodiments of the present invention will be described with reference to the drawings.

### First Detailed Representative Embodiment

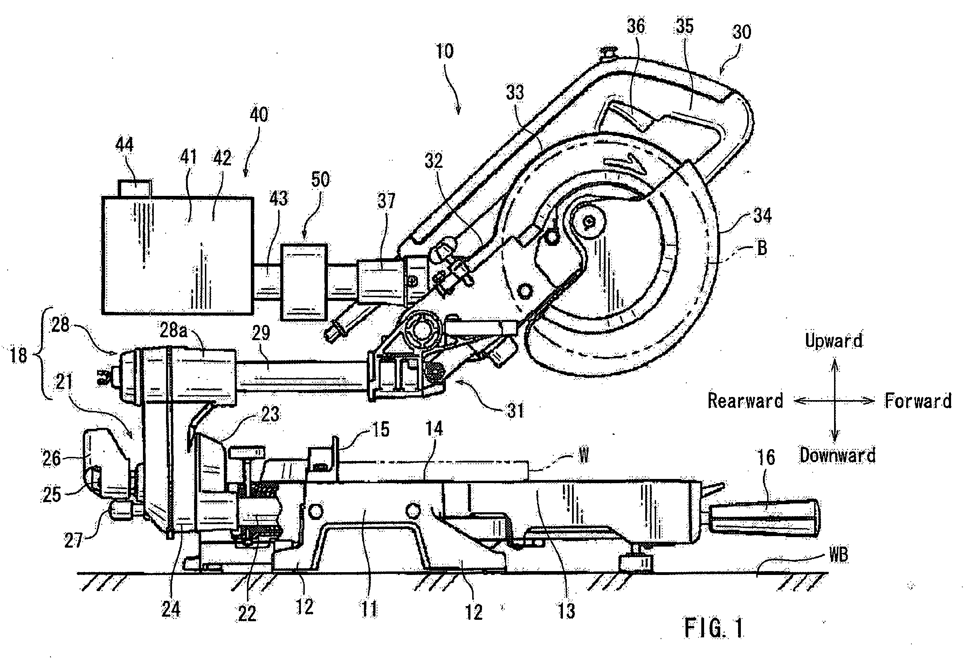

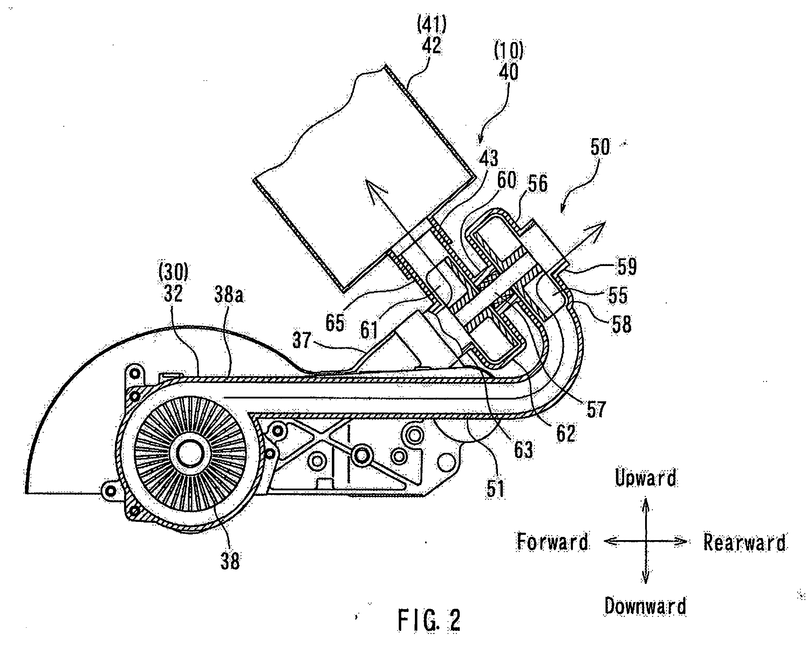

A first detailed representative embodiment of the present invention will be described with reference to FIGS. 1 and 2.
In this embodiment, a (table or bench) sliding circular saw 10 (a cutting machine) is exemplified as an electrical power tool. The sliding circular saw 10 has a dust-collecting mechanism (device) 40 that is capable of collecting cutting powder or chips (dust) produced by a cutting operation of the sliding circular saw 10. Further, the sliding circular saw 10 has the substantially same structure as a known sliding circular saw except for the dust-collecting mechanism 40.

In the following description, right and left sides in FIG. 1 respectively correspond to front and back (rear) sides of the sliding circular saw 10. Also, back and front sides in FIG. 1 respectively correspond to right and left sides of the sliding circular saw 10. As will be recognized, a user is positioned on the right side in FIG. 1 (the front side of the sliding circular saw 10) in order to use the sliding circular saw 10. Further, a direction of cutting action by the sliding circular saw 10 corresponds to a front-to-rear direction of the sliding circular saw 10.

First, a structure of the sliding circular saw 10 except for the dust-collecting mechanism 40 will be described. As shown in FIG. 1, the sliding circular saw 10 basically includes a base 11, a table 13, a circular saw main body supporting portion 18 (which will be hereinafter simply referred to as a supporting portion 18) that is disposed on a rear portion of the table 13, and a circular saw main body 30 that is positioned above the table 13 while it is supported by the supporting portion 18.

The base 11 is constructed to be positioned on and secured to a workbench WB or other such support members. The base 11 may preferably have leg portions 12, so as to be stably positioned on the workbench WB. The table 13 is horizontally rotatably supported on the base 11. The table 13 has a (horizontal) mounting surface 14, so that a material W to be cut (which will be hereinafter referred to as a workpiece W) can be received thereon. The table 13 has a positioning fence 15 that is positioned on a rear end portion (a left end portion in FIG. 1) of the mounting surface 14, so that the workpiece W can be appropriately positioned on the table 13. In particular, the positioning fence 15 is secured to the base 11 while it is positioned on the rear end portion of the mounting surface 14. Further, the table 13 has an operation lever 16, so that a horizontal rotational position of the table 13 can be changed by operating the operation lever 16. That is, a horizontal angle of the table 13 relative to the base 11 and the positioning fence 15 can be determined by operating the operation lever 16. Therefore, the workpiece W disposed thereon can be cut at various angles in plan.

The supporting portion 18 disposed on the rear portion of the table 13 includes a tiltably supporting mechanism 21 and a slidably supporting mechanism 28. The tiltably supporting mechanism 21 is essentially composed of a pair of (right and left) slide bars 22, a support member 23, a tilting member 24, a tilting shaft 25, a fixing lever 26 and a positioning shaft 27. The slide bars 22 are positioned in parallel with each other in a longitudinal direction and are respectively attached to the table 13 so as to be slidable longitudinally (back and force). The support member 23 is connected to rear end portions of the slide bars 22. The tilting member 24 is connected to the support member 23 via the tilting shaft 25, so as to be rotatable or tiltable relative to the support member 23. Further, the tilting shaft 25 may preferably be positioned between the slide bars 22 in parallel therewith. The fixing lever 26 is arranged and constructed to secure a tilting position (angle) of the tilting member 24 relative to the support member 23. Further, the positioning shaft 27 is arranged and constructed to change the tilting angle of the tilting member 24 relative to the support member 23. Thus, the positioning shaft 27 is capable of adjusting the tilting angle of the tilting member 24 relative to the support member 23 to desired angles. In other words, the positioning shaft 27 is capable of determining cutting positions (an orthogonal cutting position or oblique cutting positions).

The slidably supporting mechanism 28 includes a slide support portion 28a and a pair of (right and left) slide bars 29. The slide support portion 28a is connected to an upper portion of the tilting member 24. The slide bars 29 are positioned in parallel with each other in a longitudinal direction. Further, the slide bars 29 may preferably be positioned in parallel with the mounting surface 14 of the table 13 and the tilting shaft 25. Rear end portions of the slide bars 29 are slidably connected to the slide support portion 28a. Therefore, the slide bars 29 can be slid longitudinally (back and forth) relative to the tilting member 24. Conversely, front end portions of the slide bars 29 are respectively connected to a swing mechanism 31. Further, the circular saw main body 30 is connected to the swing mechanism 31, so as to be tilted vertically (upwardly and downwardly).

When the tilting member 24 is rotated or tilted (rightwardly or leftwardly) relative to the support member 23 by the positioning shaft 27, the slide bars 29 connected to the tilting member 24 via the slide support portion 28a can be tilted. As a result, the circular saw main body 30 connected to the slide bars 29 can be tilted, so as to be inclined (rightwardly or leftwardly) relative to the mounting surface 14 of the table 13. Thus, a circular rotary cutter blade B provided to the circular saw main body 30 can be tilted or inclined rightwardly and leftwardly, so that the workpiece W can be obliquely cut at various angles.

Further, when the slide bars 29 are slid longitudinally relative to the tilting member 24, the circular saw main body 30 connected to the slide bars 29 via the swing mechanism 31 can be moved longitudinally relative to the tilting member 24. Therefore, the circular saw main body 30 can be moved longitudinally along a horizontal surface of the workpiece W (the mounting surface 14 of the table 13) while the circular saw main body 30 is tilted downwardly in order to cut the workpiece W. As a result, the large size workpiece W can be cut.

As shown in FIG. 1, the circular saw main body 30 has a housing 32 having a frame structure. The housing 32 includes a semicircular blade case 33 that is positioned on a front portion thereof. A rear portion of the housing 32 is connected to the swing mechanism 31, so that the circular saw main body 30 can be connected to the swing mechanism 31. Further, the circular rotary cutter blade B is rotatably supported on the semicircular blade case 33 while a substantially upper half of a circumference of the rotary cutter blade B is covered by the blade case 33. Also, the circular saw main body 30 has a drive mechanism having a drive motor (not shown) as a power source of the rotary cutter blade B (the sliding circular saw 10). The drive motor may preferably be a brush motor that can be actuated by an external power source. The drive motor is received in the housing 32.

The rotary cutter blade B can be rotated clockwise shown by an outline arrow in FIG. 1. Therefore, in a cutting site in which a cutting edge of the rotary cutter blade B can be cut into the workpiece W, the cutting edge of the rotary cutter blade B can be moved upwardly. As a result, the cutting chips produced by the cutting operation of the sliding circular saw 10 can be blown up into the housing 32 from the cutting site.

As shown in FIG. 1, the housing 32 includes a dust-collecting nozzle (dust-collecting port) 37 that is disposed on the rear portion thereof. The dust-collecting nozzle 37 is arranged and constructed to discharge the cutting chips in the housing 32 (the blade case 33) therethrough. Further, the housing 32 has an air inlet port (not shown) that is capable of introducing external air into the housing 32 therethrough.

The circular saw main body 30 has a movable cover 34 that is positioned on the front portion of the housing 32. The movable cover 34 is vertically rotatably attached to the housing 32 (the blade case 33). The movable cover 34 is capable of being rotated with vertical (swing) motion of the circular saw main body 30. In a condition in which the circular saw main body 30 is positioned in an upper standby (retracted) position, a substantially lower half of the circumference of the rotary cutter blade B that is projected from the blade case 33 can be covered by the movable cover 34 (FIG. 1). When the circular saw main body 30 is moved downwardly, the movable cover 34 is rotated counterclockwise in FIG. 1, so as to be gradually opened. Further, FIG. 1 shows a condition in which the circular saw main body 30 is moved to the retracted position thereof, so that the movable cover 34 is fully closed.

As shown in FIG. 1, the circular saw main body 30 has an operation handle 35 that is capable of being grasped by the user. The operation handle 35 is integrally attached to a right side portion of the housing 32. The operation handle 35 has an annular (loop) shape and has a switch lever 36. The switch lever 36 is operably attached to an inner circumference of the operation handle 35. Therefore, the user can operate the switch lever 36 by fingers while grasping the operation handle 35 by hand. When the switch lever 36 is pulled or pressed by the user, a main switch (not shown) embedded in the operation handle 35 can be turned on, so that the drive motor can be actuated. As a result, the rotary cutter blade B can be rotated by the drive motor. Further, the user can move the circular saw main body 30 upwardly and downwardly by grasping the operation handle 35 by hand.

Further, the circular saw main body 30 has a cooling fan 38 (FIG. 2) rotatably disposed in a cooling fan housing that is integrally formed in the housing 32. The cooling fan 38 is positioned adjacent to the drive motor in order to cool down the drive motor. The cooling fan 38 is arranged and constructed to be actuated by the drive motor. The cooling fan 38 is constructed to draw external air into the cooling fan housing (the housing 32) through the air inlet port formed therein and to blow the drawn air toward the drive motor. In particular, the cooling fan 38 is a centrifugal fan (a centrifugal air blower). That is, the cooling fan 38 is capable of axially drawing air into the cooling fan housing and capable of centrifugally (tangentially) blowing the drawn air therefrom. Upon actuation of the cooling fan 38, a negative pressure can be generated in the cooling fan housing. As a result, external air can be drawn into the cooling fan housing through the air inlet port formed therein and then be centrifugally blown into the drive motor, so as to cool down the drive motor. Thereafter, the external air blown into and passing through the drive motor can be axially drawn into the cooling fan 38 again and then be centrifugally (tangentially) blown out or discharged via an outlet port 38a that is formed in the cooling fan housing.

Next, a structure of the dust-collecting mechanism 40 will be described in detail with reference to FIG. 2. Further, the dust-collecting mechanism 40 may preferably be a cyclone dust-collecting mechanism. As shown in FIG. 2, the dust-collecting mechanism 40 includes a dust-collecting box 41 (a dust-collecting container) and a dust-collecting air flow generating mechanism 50 (a dust-collecting air flow generating means). The dust-collecting box 41 has a box main body 42, an inlet port 43 formed in the box main body 42, and an air outlet port 44 (FIG. 1) formed in the box main body 42. The box main body 42 has a plurality of divided dust-collecting chambers (not shown), so that the cutting chips passing therethrough can be successively collected in the dust-collecting chambers due to a cyclone effect. Further, the structure of the dust-collecting mechanism 40 is described in Japanese Laid-Open Patent Publication No. 2006-159777.

As shown in FIG. 2, the dust-collecting air flow generating mechanism 50 includes an air feeding duct 51, a drive fan 55, a drive fan housing 56 having an inlet portion 58 and an outlet portion 59, a dust-collecting fan 61, a dust-collecting fan housing 62 having an inlet portion 63 and an outlet portion 65 (a dust-collecting duct). One end (an upstream end) of the air feeding duct 51 is integrally connected to the outlet port 38a formed in the cooling fan housing. Conversely, the other end (a downstream end) of the air feeding duct 51 is integrally connected to the inlet portion 58 of the drive fan housing 56. Thus, the air discharged from the outlet port 38a of the cooling fan 38 can be introduced into the drive fan housing 56 via the air feeding duct 51. As shown therein, the air feeding duct 51 is appropriately shaped or bent according to a relative position of the cooling fan 38 and the drive fan 55.

The drive fan 55 has the substantially same structure as the cooling fan 38 and is rotatably disposed in the drive fan housing 56. However, the drive fan 55 is arranged and constructed to be rotated when the air discharged from the outlet port 38a of the cooling fan 38 is introduced into the drive fan housing 56 via the air feeding duct 51 (i.e., when an air flow generated by the cooling fan 38 is introduced into the drive fan housing 56). Also, the drive fan 55 is arranged and constructed to discharge the air introduced into the drive fan housing 56 through the outlet portion 59 in an axial direction. Further, the drive fan 55 has a rotation shaft 57 that is axially received in the drive fan housing 56. The drive fan 55 is securely connected to the rotation shaft 57, so as to be rotated therewith.

Similar to the drive fan 55, the dust-collecting fan 61 has the substantially same structure as the cooling fan 38 and is rotatably disposed in the dust-collecting fan housing 62. The dust-collecting fan housing 62 is integrated with the drive fan housing 56 via a narrowed connecting portion 60. The dust-collecting fan 61 is securely connected to the rotation shaft 57 that is projected into the dust-collecting fan housing 62 via the narrowed connecting portion 60. Therefore, the dust-collecting fan 61 is capable of rotating with the drive fan 55. The dust-collecting fan 61 is arranged and constructed to axially draw air into the dust-collecting fan housing 62 via the inlet portion 63 and to centrifugally blow out the drawn air therefrom via the outlet portion 65 when it is rotated. Further, the inlet portion 63 of the dust-collecting fan housing 62 is coupled to the dust-collecting nozzle 37 of the housing 32. Conversely, the outlet portion 65 of the dust-collecting fan housing 62 is coupled to the inlet port 43 of the dust-collecting box 41. Thus, in this embodiment, the dust-collecting fan 61 is positioned adjacent to the inlet port 43 of the dust-collecting box 41.

An operation of the dust-collecting mechanism 40 of the sliding circular saw 10 thus constructed will now be described with reference to FIGS. 1 and 2.
When the drive motor is actuated in order to perform the cutting operation of the sliding circular saw 10, the rotary cutter blade B can be rotated. When the cutting operation of the sliding circular saw 10 is started, the cutting chips produced by the cutting operation can be blown up into the housing 32 from the cutting site.

When the drive motor is actuated, the cooling fan 38 can be simultaneously actuated. Upon actuation of the cooling fan 38, external air can be drawn into the cooling fan housing (the housing 32) through the air inlet port formed therein and then be blown toward the drive motor, so as to cool down the drive motor. The air blown into and passing through the drive motor can be drawn into the cooling fan 38 again and then be blown out or discharged via an outlet port 38a formed in the cooling fan housing as a discharged air flow.

The air discharged from the outlet port 38a of the cooling fan 38 (the discharged air flow) can be introduced into the drive fan housing 56 via the air feeding duct 51 and the inlet portion 58. As a result, the drive fan 55 can be rotated by an air pressure of the discharged air that is introduced into the drive fan housing 56. Upon rotation of the drive fan 55, the rotation shaft 57 can be rotated because the drive fan 55 is securely connected to the rotation shaft 57. As a result, the dust-collecting fan 61 securely connected to the rotation shaft 57 can be rotated in synchrony with the drive fan 55. Upon rotation of the dust-collecting fan 61, a negative pressure can be generated in the dust-collecting fan housing 62. As a result, a dust-collecting air flow from outside toward inside of the box main body 42 (the dust-collecting box 41) can be produced, so that air containing the cutting chips (which may be referred to as cutting chip-containing air) in the dust-collecting nozzle 37 of the housing 32 can be drawn into the dust-collecting fan housing 62 via the inlet portion 63 and then be blown into the box main body 42 via the outlet portion 65. The cutting chip-containing air blown into the box main body 42 can flow through the box main body 42, so that the cutting chips can be successively separated from the air and collected in the dust-collecting chambers formed in the box main body 42 due to the cyclone effect. Further, the air (the cleaned up air) passing through the box main body 42 can be discharged from the air outlet port 44 formed in the box main body 42. Thus, the cutting chips produced by the cutting operation of the sliding circular saw 10 can be effectively collected by the dust-collecting mechanism 40.

According to the dust-collecting mechanism 40 of the first embodiment thus constructed, the dust-collecting fan 61 can be actuated by the drive fan 55 that can be driven by the air discharged from the cooling fan 38. Therefore, it is not necessary to provide a drive force transmission mechanism that is capable of transmitting a drive force of the drive motor to the dust-collecting fan 61 in order to rotate the same, or a fan motor that is used exclusively to rotate the dust-collecting fan 61. As a result, the dust-collecting mechanism 40 may have a simplified structure.

In addition, in the dust-collecting mechanism 40 of the present embodiment, the drive fan 55 is communicated with the cooling fan 38 via the air feeding duct 51. Therefore, even if the relative position of the cooling fan 38 and the drive fan 55 is changed, the drive fan 55 can be easily communicated with the cooling fan 38 by simply shaping or bending the air feeding duct 51. As a result, it is not necessary to change a basic structure of the sliding circular saw 10 in order to provide the dust-collecting mechanism 40 thereto.

Further, the dust-collecting fan 61 is coaxially integrated with the drive fan 55 via the rotation shaft 57, so as to be driven in synchrony with the drive fan 55. That is, the dust-collecting fan 61 can be actuated by the drive fan 55 without providing a complicated coupling mechanism.

### Second Detailed Representative Embodiment

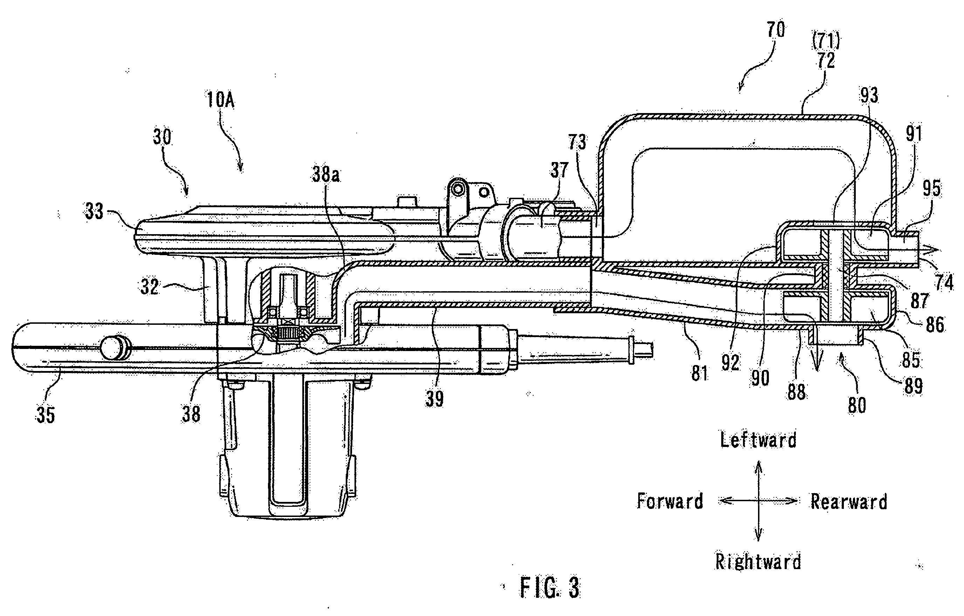

The second detailed representative embodiment will now be described in detail with reference to FIG. 3.
Because the second embodiment relates to the first embodiment, only the constructions and elements that are different from the first embodiment will be explained in detail. Elements that are the same in the first and second embodiments will be identified by the same reference numerals and a detailed description of such elements may be omitted.

A sliding circular saw 10A of this embodiment has a dust-collecting mechanism 70. As shown in FIG. 3, the dust-collecting mechanism 70 includes a dust-collecting box 71 (a dust-collecting container) and a dust-collecting air flow generating mechanism 80. The dust-collecting box 71 has a box main body 72, an inlet portion 73 formed in the box main body 72, and an air outlet portion 74 formed in the box main body 72.

As shown in FIG. 3, the dust-collecting air flow generating mechanism 80 includes an air feeding duct 81, a drive fan 85, a drive fan housing 86 having an inlet portion 88 and an outlet portion 89, a dust-collecting fan 91, a dust-collecting fan housing 92 having an inlet portion 93 and an outlet portion 95 (an air-discharging duct). As will be apparent from FIG. 3, unlike the first embodiment, the dust-collecting fan housing 92 is integrated with the dust-collecting box 71 (the box main body 72). In particular, the dust-collecting fan housing 92 is integrated with the box main body 72 such that the dust-collecting fan 91 can be positioned within the box main body 72. That is, the inlet portion 93 is opened into inside of the box main body 72. Further, the outlet portion 95 is formed as a portion in common with the air outlet portion 74 of the dust-collecting box 71, so as to be opened into outside of the box main body 72.

One end (an upstream end) of the air feeding duct 81 is coupled to a duct portion 39 that is integrally connected to the outlet port 38a formed in the cooling fan housing. Conversely, the other end (a downstream end) of the air feeding duct 81 is integrally connected to the inlet portion 88 of the drive fan housing 86. Thus, the air discharged from the outlet port 38a of the cooling fan 38 can be introduced into the drive fan housing 86 via the duct portion 39 and the air feeding duct 81.

The drive fan 85 is rotatably disposed in the drive fan housing 86. The drive fan 85 is arranged and constructed to be rotated when the air discharged from the outlet port 38a of the cooling fan 38 is introduced into the drive fan housing 86 via the duct portion 39 and the air feeding duct 81. Also, the drive fan 85 is arranged and constructed to discharge the air introduced into the drive fan housing 86 through the outlet portion 89 in an axial direction. Further, the drive fan 85 has a rotation shaft 87 that is axially received in the drive fan housing 86. The drive fan 85 is securely connected to a rotation shaft 87, so as to be rotated therewith.

The dust-collecting fan 91 is rotatably disposed in the dust-collecting fan housing 92. Further, the dust-collecting fan housing 92 is integrated with the drive fan housing 86 via a narrowed connecting portion 90. The dust-collecting fan 91 is securely connected to the rotation shaft 87 that is projected into the dust-collecting fan housing 92 via the narrowed connecting portion 90. Therefore, the dust-collecting fan 91 is capable of rotating with the drive fan 85. The dust-collecting fan 91 is arranged and constructed to axially draw air into the dust-collecting fan housing 92 via the inlet portion 93 and to centrifugally blow out the drawn air therefrom via the outlet portion 95 when it is rotated.

As described above, unlike the first embodiment, the inlet portion 93 of the dust-collecting fan housing 92 is opened into inside of the box main body 72 and is not coupled to the dust-collecting nozzle 37 of the housing 32. Instead, the inlet portion 73 of the dust-collecting box 71 is coupled to the dust-collecting nozzle 37 of the housing 32. Conversely, unlike the first embodiment, the outlet portion 95 of the dust-collecting fan housing 92 (which portion is formed as the portion in common with the air outlet portion 74 of the dust-collecting box 71) is opened into outside of the box main body 72. Thus, in this embodiment, the dust-collecting fan 91 is positioned adjacent to the air outlet portion 74 of the dust-collecting box 71.

An operation of the dust-collecting mechanism 70 of the sliding circular saw 10A thus constructed will now be described with reference to FIG. 3.
The air discharged from the outlet port 38a of the cooling fan 38 can be introduced into the drive fan housing 86 via the duct portion 39, the air feeding duct 81 and the inlet portion 88. As a result, the drive fan 85 can be rotated by an air pressure of the discharged air that is introduced into the drive fan housing 86. Upon rotation of the drive fan 85, the rotation shaft 87 can be rotated. As a result, the dust-collecting fan 91 securely connected to the rotation shaft 87 can be rotated in synchrony with the drive fan 85. Upon rotation of the dust-collecting fan 91, a negative pressure can be generated in the dust-collecting fan housing 92. As a result, a negative pressure can be generated in the box main body 72 because the inlet portion 93 of the dust-collecting fan housing 92 is opened into inside of the box main body 72. Upon generation of the negative pressure in the box main body 72, a dust-collecting air flow from inside toward outside of the box main body 72 (the dust-collecting box 71) can be produced, so that the cutting chip-containing air in the dust-collecting nozzle 37 of the housing 32 can be drawn into the box main body 72. The cutting chip-containing air drawn into the box main body 72 can flow through the box main body 72, so that the cutting chips can be successively separated from the air and collected in the dust-collecting chambers formed in the box main body 72 due to the cyclone effect. Further, the air (the cleaned up air) passing through the box main body 72 can be drawn into the dust-collecting fan housing 92 via the inlet portion 93 and then be blown out or discharged from the outlet portion 95 of the dust-collecting fan housing 92 (the air outlet portion 74 of the dust-collecting box 71). Thus, the cutting chips produced by the cutting operation of the sliding circular saw 10A can be effectively collected by the dust-collecting mechanism 70.

Various changes and modifications may be made to the first and second embodiments. For example, in the embodiments, the sliding circular saw 10 and 10A is exemplified as the electrical power tool. However, the sliding circular saw 10 and 10A can be replaced with a table circular saw, a router, a sander or other such machines.

In the embodiments, the drive fan 55 and 85 can be rotated by the air discharged from the cooling fan 38. However, the drive fan 55 and 85 can be designed to be rotated by the air drawn into the cooling fan 38.
In the embodiments, the dust-collecting mechanism 40 and 70 includes the dust-collecting box 41 and 71. However, the dust-collecting mechanism 40 and 70 may include the dust-collecting bag instead of the dust-collecting box 41 and 71.

Further, in the embodiments, the dust-collecting air flow generating mechanism 50 and 80 in which the dust-collecting fan 61 and 91 are coaxially integrated with the drive fan 55 and 85 via the rotation shaft 57 and 87 is used as the dust-collecting air flow generating means. However, the dust-collecting air flow generating means is not limited to the dust-collecting air flow generating mechanism 50 and 80 thus constructed. In addition, each of the drive fan 55 and 85 and the dust-collecting fan 61 and 91 is not limited to the centrifugal fan.

Further, in the embodiments, the dust-collecting air flow generating mechanism 50 and 80 is rigidly integrated with the dust-collecting box 41 and 71. However, the dust-collecting air flow generating mechanism 50 and 80 can be positioned separately from the dust-collecting box 41 and 71.

Representative examples of the present invention have been described in detail with reference to the attached drawings. This detailed description is merely intended to teach a person of skill in the art further details for practicing preferred aspects of the present invention and is not intended to limit the scope of the invention. Only the claims define the scope of the claimed invention.

## Claims

1. A dust-collecting mechanism (40; 70) of an electrical power tool (10; 10A) which has a drive motor as a power source thereof and a cooling fan (38) capable of cooling the drive motor, comprising:
a dust-collecting container (41; 71) that is capable of collecting cutting chips produced from the electrical power tool (10; 10A), and
a dust-collecting air flow generating means (50; 80) having a drive fan (55; 85), **characterised in that**
the drive fan (55; 85) is arranged and constructed to be rotated by an air flow generated by the cooling fan (38), and
the dust-collecting air flow generating means (50; 80) is arranged and constructed to generate a dust-collecting air flow capable of introducing the cutting chips into the dust-collecting container (41; 71) when the drive fan (55; 85) is rotated.

2. The dust-collecting mechanism as defined in claim 1, wherein the air flow generated by the cooling fan (38) comprises a discharged air flow of the cooling fan (38).

3. The dust-collecting mechanism as defined in claim 1 or 2, wherein the dust-collecting air flow generating means (50; 80) has a dust-collecting fan (61; 91) that is coaxially integrated with the drive fan (55; 85), so as to be rotated with the drive fan 55; 85), and wherein the dust-collecting fan (61; 91) is arranged and constructed to generate the dust-collecting air flow when rotated.

4. The dust-collecting mechanism as defined in claim 3, wherein the dust-collecting fan (61) is positioned adjacent to an inlet port (43) of the dust-collecting container (41) such that the dust-collecting air flow can be generated from outside toward inside of the dust-collecting container (41).

5. The dust-collecting mechanism as defined in claim 3, wherein the dust-collecting fan (91) is positioned adjacent to an outlet port (74) of the dust-collecting container (71) such that the dust-collecting air flow can be generated from inside toward outside of the dust-collecting container (71).

6. The dust-collecting mechanism as defined in claim 1 or 2, wherein the dust-collecting air flow generating means (50) has a dust-collecting fan (61) that is arranged and constructed to be rotated by the drive fan (55), wherein the dust-collecting fan (61) is disposed in a dust-collecting fan housing (62) having an inlet portion (63) and an outlet portion (65), and wherein the inlet portion (63) and the outlet portion (65) of the dust-collecting fan housing (62) are respectively connected to a dust-collecting nozzle (37) of the electrical power tool (10) and an inlet port (43) of the dust-collecting container (41).

7. The dust-collecting mechanism as defined in claim 6, wherein when the dust-collecting fan (61) is rotated, a negative pressure can be generated in the dust-collecting fan housing (62), so that the cutting chips can be drawn into the dust-collecting fan housing (62) via the inlet portion (63) of the dust-collecting fan housing (62) and be blown into the dust-collecting container (41) via the outlet portion (65) of the dust-collecting fan housing (62).

8. The dust-collecting mechanism as defined in claim 3, 6 and 7, wherein the dust-collecting fan (61) is arranged and constructed to be rotated in synchrony with the drive fan (55).

9. The dust-collecting mechanism as defined in claim 1 or 2, wherein the dust-collecting air flow generating means (80) has a dust-collecting fan (91) that is arranged and constructed to be rotated by the drive fan (85), wherein the dust-collecting fan (91) is disposed in a dust-collecting fan housing (92) having an inlet portion (93) and an outlet portion (95), wherein the inlet portion (93) and the outlet portion (95) of the dust-collecting fan housing (92) are respectively opened into inside and outside of the dust-collecting container (71), and wherein an inlet port (73) of the dust-collecting container (71) is connected to a dust-collecting nozzle (37) of the electrical power tool (10A).

10. The dust-collecting mechanism as defined in claim 9, wherein when the dust-collecting fan (91) is rotated, a negative pressure can be generated in the dust-collecting fan housing (92), so that the cutting chips can be drawn into the dust-collecting container (71) via the inlet port (73) thereof.

11. The dust-collecting mechanism as defined in claim 9 or 10, wherein the dust-collecting fan (91) is arranged and constructed to be rotated in synchrony with the drive fan (85).

12. The dust-collecting mechanism as defined in claim 9, 10 or 11, wherein the dust-collecting fan housing (92) is integrally formed in the dust-collecting container (71).

13. An electric power tool (10; 10A) comprising
a drive motor as a power source thereof,
a cooling fan (38) capable of cooling the drive motor, and
a dust-collecting mechanism (40; 70) according to any one of claims 1 to 12.

14. The electric power tool (10; 10A) according to claim 13, wherein the power tool is a cutting machine.

## Patentansprüche

1. Staubsammelmechanismus (40; 70) eines elektrischen Kraftwerkzeugs (10;10A), das einen Antriebsmotor als ein Antriebsaggregat davon hat und einen Kühlungsventilator (38) hat, der zum Kühlen des Antriebsmotors geeignet ist, mit
einem Staubsammelcontainer (41; 71), der zum Sammeln von Schneidspäne, die von dem elektrischen Kraftwerkzeug (10; 10A) produziert werden, geeignet ist, und
einem Staubsammelluftströmungserzeugungsmittel (50; 80), das einen Antriebsventilator (55; 85) hat, **dadurch gekennzeichnet, dass**
der Antriebsventilator (55; 85) angeordnet und konstruiert ist, durch eine Luftströmung, die durch den Kühlungsventilator (38) erzeugt wird, gedreht zu werden, und
das Staubsammelluftströmungserzeugungsmittel (50; 80) zum Erzeugen einer Staubsammelluftströmung, die zum Einführen der Schneidspäne in den Staubsammelcontainer (41; 71) geeignet ist, angeordnet und konstruiert, wenn der Antriebsventilator (55; 85) gedreht wird.

2. Staubsammelmechanismus nach Anspruch 1, bei dem die Luftströmung, die durch den Kühlungsventilator (38) erzeugt wird, eine Abluftströmung des Kühlungsventilators (38) aufweist.

3. Staubsammelmechanismus nach Anspruch 1 oder 2, bei dem das Staubsammelluftströmungserzeugungsmittel (50; 80) einen Staubsammelventilator (61; 91) hat, der koaxial mit dem Antriebsventilator (55; 85) integriert ist, so dass er mit dem Antriebsventilator (55; 85) dreht, und wobei der Staubsammelventilator (61; 91) zum Erzeugen der Staubsammelluftströmung angeordnet und konstruiert ist, wenn er gedreht wird.

4. Staubsammelmechanismus nach Anspruch 3, bei dem der Staubsammelventilator (61) angrenzend an eine Einlassöffnung (43) des Staubsammelcontainers (41) positioniert ist, so dass die Staubsammelluftströmung von einer Außenseite in Richtung einer Innenseite des Staubsammelcontainers (41) erzeugt werden kann.

5. Staubsammelmechanismus nach Anspruch 3, bei dem der Staubsammelventilator (91) angrenzend an eine Auslassöffnung (74) des Staubsammelcontainers (71) positioniert ist, so dass die Staubsammelluftströmung von einer Innenseite in Richtung einer Außenseite des Staubsammelcontainers (71) erzeugt werden kann.

6. Staubsammelmechanismus nach Anspruch 1 oder 2, bei dem das Staubsammelluftströmungserzeugungsmittel (50) einen Staubsammelventilator (61) hat, der angeordnet und konstruiert ist, um durch den Antriebsventilator (55) gedreht zu werden, wobei der Staubsammelventilator (61) in einem Staubsammelventilatorgehäuse (62) angeordnet ist, das einen Einlassteil (63) und einen Auslassteil (65) hat, und wobei der Einlassteil (63) und der Auslassteil (65) des Staubsammelventilatorgehäuses (62) jeweils mit einem Staubsammelansatzrohr (37) des elektrischen Kraftwerkzeuges (10) und einer Einlassöffnung (43) des Staubsammelcontainers (41) verbunden sind.

7. Staubsammelmechanismus nach Anspruch 6, bei dem, wenn der Staubsammelventilator (61) gedreht wird, ein Unterdruck in dem Staubsammelventilatorgehäuse (62) erzeugt werden kann, so dass die Schneidspäne in das Staubsammelventilatorgehäuse (62) über den Einlassteil (63) des Staubsammelventilatorgehäuses (62) gesaugt werden können und in den Staubsammelcontainer (41) über den Auslassteil (65) des Staubsammelventilatorgehäuses (62) geblasen werden.

8. Staubsammelmechanismus nach Anspruch 3, 6 und 7, bei dem der Staubsammelventilator (61) angeordnet und konstruiert ist, um synchron mit dem Antriebsventilator (55) gedreht zu werden.

9. Staubsammelmechanismus nach Anspruch 1 oder 2, bei dem das Staubsammelluftströmungserzeugungsmittel (80) einen Staubsammelventilator (91) hat, der angeordnet und konstruiert ist, um durch den Antriebsventilator (85) gedreht zu werden, wobei der Staubsammelventilator (91) in einem Staubsammelventilatorgehäuse (92) angeordnet ist, das einen Einlassteil (93) und einen Auslassteil (95) hat, wobei der Einlassteil (93) und der Auslassteil (95) des Staubsammelventilatorgehäuses (92) jeweils in eine Innenseite und eine Außenseite des Staubsammelcontainers (71) geöffnet sind, und wobei eine Einlassöffnung (73) des Staubsammelcontainers (71) mit einem Staubsammelansatzrohr (37) des elektrischen Kraftwerkzeuges (10A) verbunden ist.

10. Staubsammelmechanismus nach Anspruch 9, bei dem, wenn der Staubsammelventilator (91) gedreht wird, ein Unterdruck in dem Staubsammelventilatorgehäuse 92 erzeugt werden kann, so dass die Schneidspäne in den Staubsammelcontainer 71 über die Einlassöffnung (73) davon gesaugt werden können.

11. Staubsammelmechanismus nach Anspruch 9 oder 10, bei dem der Staubsammelventilator (91) angeordnet und konstruiert ist, um synchron mit dem Antriebsventilator (85) gedreht zu werden.

12. Staubsammelmechanismus nach Anspruch 9, 10 oder 11, bei dem das Staubsammelventilatorgehäuse (92) integral in dem Staubsammelcontainer (71) gebildet ist.

13. Elektrisches Kraftwerkzeug (10; 10A) mit
einem Antriebsmotor als ein Antriebsaggregat davon,
einem Kühlungsventilator (38), der zum Kühlen des Motors geeignet ist, und
einem Staubsammelmechanismus (40; 70) nach einem der Ansprüche 1 bis 12.

14. Elektrisches Kraftwerkzeug (10; 10A) nach Anspruch 13, bei dem das Kraftwerkzeug eine Schneidemaschine ist.

## Revendications

1. Mécanisme collecteur de poussières (40 ; 70) d'un outil électrique (10 ; 10A) qui a un moteur d'entraînement comme source d'alimentation et un ventilateur de refroidissement (38) capable de refroidir le moteur d'entraînement, comprenant :
un bac collecteur de poussière (41 ; 71) qui est capable de recueillir des fragments de coupe produits par l'outil électrique (10 ; 10A), et
un moyen générateur d'écoulement d'air collecteur de poussières (50 ; 80) ayant un ventilateur d'entraînement (55 ; 85) **caractérisé en ce que** :
le ventilateur d'entraînement (55 ; 85) est aménagé et conçu pour être soumis à une rotation par un écoulement d'air généré par le ventilateur de refroidissement (38), et
le moyen générateur d'écoulement d'air collecteur de poussière (50 ; 80) est aménagé et conçu pour générer un écoulement d'air collecteur de poussières capable d'introduire les fragments de coupe dans le bac collecteur de poussières (41 ; 71) lorsque le ventilateur d'entraînement (55 ; 85) est soumis à une rotation.

2. Mécanisme collecteur de poussières selon la revendication 1, dans lequel l'écoulement d'air généré par le ventilateur de refroidissement (38) comprend un écoulement d'air déchargé du ventilateur de refroidissement (38).

3. Mécanisme collecteur de poussière selon la revendication 1 ou la revendication 2, dans lequel le moyen générateur d'écoulement d'air collecteur de poussières (50 ; 80) a un ventilateur collecteur de poussières (61 ; 91) qui est coaxialement intégré au ventilateur d'entraînement (55 ; 85) de façon à être entraîné en rotation avec le ventilateur d'entraînement (55 ; 85) et dans lequel le ventilateur collecteur de poussière (61 ; 71) est aménagé et conçu pour générer l'écoulement d'air collecteur de poussières lorsqu'il est soumis à une rotation<;

4. Mécanisme collecteur de poussière selon la revendication 3, dans lequel le ventilateur collecteur de poussières (61) est positionné adjacent à un orifice d'entrée (43) du bac collecteur de poussières (41) de sorte que l'écoulement d'air collecteur de poussières puisse être généré de l'extérieur vers l'intérieur du bac collecteur de poussières (41).

5. Mécanisme collecteur de poussières selon la revendication 3, dans lequel le ventilateur collecteur de poussières (91) est positionné adjacent à un orifice de sortie (74) du bac collecteur de poussières (71) de sorte que l'écoulement d'air collecteur de poussières puisse être généré de l'intérieur vers l'extérieur du bac collecteur de poussière (71).

6. Mécanisme collecteur de poussières selon la revendication 1 ou la revendication 2, dans lequel le moyen générateur d'écoulement d'air collecteur de poussières (50) a un ventilateur collecteur de poussières (61) qui est aménagé et conçu pour être soumis à une rotation par le ventilateur d'entraînement (55), dans lequel le ventilateur collecteur de poussières (61) est disposé dans un boîtier (62) de ventilateur collecteur de poussières ayant une partie d'entrée (63) et une partie de sortie (65), et dans lequel la partie d'entrée (63) et la partie de sortie (65) du boîtier (62) du ventilateur collecteur de poussières sont respectivement raccordées à une buse collectrice de poussières (37) de l'outil électrique (10) et à un orifice d'entrée (43) du bac collecteur de poussières (41).

7. Mécanisme collecteur de poussières selon la revendication 6, dans lequel, lorsque le ventilateur collecteur de poussières (61) est soumis à une rotation, une pression négative peut être générée dans le boîtier (62) du ventilateur collecteur de poussières de sorte que les fragments de coupe puissent être aspirés dans le boîtier (62) du ventilateur collecteur de poussières via la partie d'entrée (63) du boîtier (62) du ventilateur collecteur de poussières et être soufflés dans le bac collecteur de poussières (41) via la partie de sortie (65) du boîtier (62) du ventilateur collecteur de poussières.

8. Mécanisme collecteur de poussières selon les revendications 3, 6 et 7, dans lequel le ventilateur collecteur de poussières (61) est aménagé et conçu pour être soumis à une rotation en synchronisme avec le ventilateur d'entraînement (55).

9. Mécanisme collecteur de poussières selon la revendication 1 ou la revendication 2, dans lequel le moyen générateur d'écoulement d'air collecteur de poussières (80) a un ventilateur collecteur de poussières (91) qui est aménagé et conçu pour être soumis à une rotation par le ventilateur d'entraînement (85), dans lequel le ventilateur collecteur de poussières (91) est disposé dans un boîtier (92) du ventilateur collecteur de poussières ayant une partie d'entrée (93) et une partie de sortie (95), dans lequel la partie d'entrée (93) et la partie de sortie (95) du boîtier (92) du ventilateur collecteur de poussières sont respectivement ouvertes vers l'intérieur et l'extérieur du bac collecteur de poussières (71) et dans lequel un orifice d'entrée (73) du bac collecteur de poussières (71) est raccordé à une buse collectrice de poussières (37) de l'outil électrique (10A).

10. Mécanisme collecteur de poussières selon la revendication 9, dans lequel, lorsque le ventilateur collecteur de poussières (91) est soumis à une rotation, une pression négative peut être générée dans le boîtier (92) du ventilateur collecteur de poussières de sorte que des fragments de coupe puissent être aspirés dans le bac collecteur de poussières (71) via son orifice d'entrée (73).

11. Mécanisme collecteur de poussières selon la revendication 9 ou la revendication 10, dans lequel le ventilateur collecteur de poussières (91) est aménagé et conçu pour tourner en synchronisme avec le ventilateur d'entraînement (85).

12. Mécanisme collecteur de poussières selon la revendication 9, 10 ou 11, dans lequel le boîtier (92) du ventilateur collecteur de poussières est formé d'une pièce avec le bac collecteur de poussières (71).

13. Outil électrique (10 ; 10A) comprenant :
un moteur d'entraînement comme source d'alimentation,
un ventilateur de refroidissement (38) capable de refroidir le moteur d'entraînement et
un mécanisme collecteur de poussières (40 : 70) selon l'une quelconque des revendications 1 à 12.

14. Outil électrique (10 ; 10A) selon la revendication 13, dans lequel l'outil électrique est une machine de coupe.
